(19) Europäisches Patentamt / European Patent Office / Office européen des brevets

(11) **EP 4 694 451 A1**

(12) **EUROPEAN PATENT APPLICATION**
published in accordance with Art. 153(4) EPC

(43) Date of publication:
**11.02.2026 Bulletin 2026/07**

(21) Application number: **24778084.4**

(22) Date of filing: **27.03.2024**

(51) International Patent Classification (IPC):
**H04W 72/0446** *(2023.01)* **H04J 3/16** *(2006.01)*

(52) Cooperative Patent Classification (CPC):
**H04J 3/16; H04L 1/00; H04W 72/0446**

(86) International application number:
**PCT/CN2024/084177**

(87) International publication number:
**WO 2024/199298 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 CN 202310339447**

(71) Applicants:
• **CHINA MOBILE COMMUNICATION CO., LTD
RESEARCH INSTITUTE
Beijing 100053 (CN)**
• **CHINA MOBILE COMMUNICATIONS GROUP CO.,
LTD.
Beijing 100032 (CN)**

(72) Inventors:
• **LIU, Sheng
Beijing 100053 (CN)**
• **LI, Han
Beijing 100053 (CN)**
• **ZHANG, Dechao
Beijing 100053 (CN)**
• **LI, Yunbo
Beijing 100053 (CN)**
• **ZOU, Hongqiang
Beijing 100053 (CN)**
• **BAI, Lirong
Beijing 100053 (CN)**
• **HAN, Liuyan
Beijing 100053 (CN)**

(74) Representative: **Herrero & Asociados, S.L.
Edificio Aqua - Calle Agustín de Foxá, 4-10, 2ºA
28036 Madrid (ES)**

(54) **MAPPING METHOD AND APPARATUS, AND ELECTRONIC DEVICE AND STORAGE MEDIUM**

(57)    A mapping method includes: inserting a first indication and/or a second indication into an overhead area of a first frame. The first indication is configured to indicate adjusting a rate of the first frame, and the second indication is configured to indicate adjusting the rate of the first frame from a first rate to a second rate.

Inserting 1st indication and/or 2nd indication in overhead area of 1st frame — 201

FIG. 2

EP 4 694 451 A1

**Description**

**CROSS REFERENCE TO RELATED APPLICATIONS**

The present application claims the priority of the Chinese patent application No. 202310339447.0, filed on March 31, 2023, contents of which are incorporated herein by its entireties.

**TECHNICAL FIELD**

Embodiments of the present disclosure relate to the technical field of communication, and more specifically, to a mapping method, an apparatus, an electronic device, and a storage medium.

**BACKGROUND**

For a traditional optical transport network (OTN), an optical service unit (OSU) may be introduced in order to enable the OTN to carry fine-granularity services ranging from 10 megabits (M) to 10 gigabits (G). However, in the art, a transmission rate of service data may not be flexibly and quickly adjusted when the fine-granularity services are being transmitted via the OTN.

**SUMMARY**

In order to solve technical problems in the art, the present disclosure provides a mapping method, an apparatus, an electronic device, and a storage medium.
The present disclosure is achieved based on the following.
The present disclosure provides a mapping method, including:

inserting a first indication and/or a second indication into an overhead area of a first frame;
wherein, the first indication is configured to indicate adjusting a rate of the first frame, and the second indication is configured to indicate adjusting the rate of the first frame from a first rate to a second rate.

In some embodiments, the mapping method further includes:
when the first indication being detected, adjusting the rate of the first frame after waiting for a first time length.
In some embodiments, the mapping method further includes:
when the second indication being detected, adjusting the rate of the first frame from the first rate to the second rate after waiting for the first time length.
In some embodiments, adjusting the rate of the first frame includes at least one of:

adjusting the number of time slots allocated by a first layer to a second layer, wherein the second layer is used to carry the first frame;
adjusting the number of time slots allocated by the first layer to the first frame.

In some embodiments, adjusting the rate of the first frame from the first rate to the second rate includes at least one of:

changing the number of time slots allocated by a first layer to a second layer from M to M+N;
changing the number of time slots allocated by the first layer to the first frame from M to M+N, wherein the second layer is used to carry the first frame, and M and N are both integers.

In some embodiments, the mapping method further includes:

determining a Cm value for a m-bit client data count based on a post-adjusted rate of the first frame and a third rate;
wherein the third rate represents a rate allocated by the first layer to the second layer after adjusting the rate of the first frame; and
mapping the first frame to a second frame in a second layer based on the post-adjusted rate of the first frame and the Cm value.

The present disclosure further provides a mapping apparatus, including:

an insertion unit, configured to insert a first indication and/or a second indication into an overhead area of a first frame; wherein, the first indication is configured to indicate adjusting a rate of the first frame, and the second indication is configured to indicate adjusting the rate of the first frame from a first rate to a second rate.

The present disclosure further provides an electronic device, including a first processor and a first communication interface.

The first processor is configured to insert a first indication and/or a second indication into an overhead area of a first frame.

The first indication is configured to indicate adjusting a rate of the first frame, and the second indication is configured to indicate adjusting the rate of the first frame from a first rate to a second rate.

The present disclosure further provides an electronic device, including a first processor and a first memory configured store a computer program that is capable of being run on the first processor.

The first processor is configured to execute, when running the computer program, operations of the mapping method as described in the above.

The present disclosure further provides a storage medium, storing a computer program. The computer program, when being executed by a processor, is configured to perform operations of the mapping method as described in the above.

According to the mapping method, the apparatus, the electronic device, and the storage medium provided in the embodiments of the present disclosure, the electronic device may insert the first indication and/or the second indication into the overhead region of the first frame. The first indication may be configured to indicate adjusting the rate of the first frame. The second indication may be configured to indicate adjusting the rate of the first frame from the first rate to the second rate. In the above disclosure, when the rate of the first frame needs to be adjusted, the first indication and/or the second indication may be inserted into the overhead area of the first frame. In this way, the electronic device may flexibly and quickly adjust the rate of the first frame based on the first indication and/or the second indication.

## BRIEF DESCRIPTION OF THE DRAWINGS

FIG. 1 is a schematic view of mapping of an optical service unit in the art.
FIG. 2 is a flow chart of a mapping method according to an embodiment of the present disclosure.
FIG. 3 is a structural schematic view of a first frame according to an embodiment of the present disclosure.
FIG. 4 is a schematic view of time slot allocation of a second layer according to an embodiment of the present disclosure.
FIG. 5 is a structural schematic view of a mapping apparatus according to an embodiment of the present disclosure.
FIG. 6 is a structural schematic view of an electronic device according to an embodiment of the present disclosure.

## DETAILED DESCRIPTIONS

An optical transport network (OTN) may include a plurality of optical channel payload units having various rates, such as OPUk, where k = 0, 1, 2, 3, 4. The OPUs of different rates may have different k values. As a value of the k is greater, the OPUk rate may be higher.

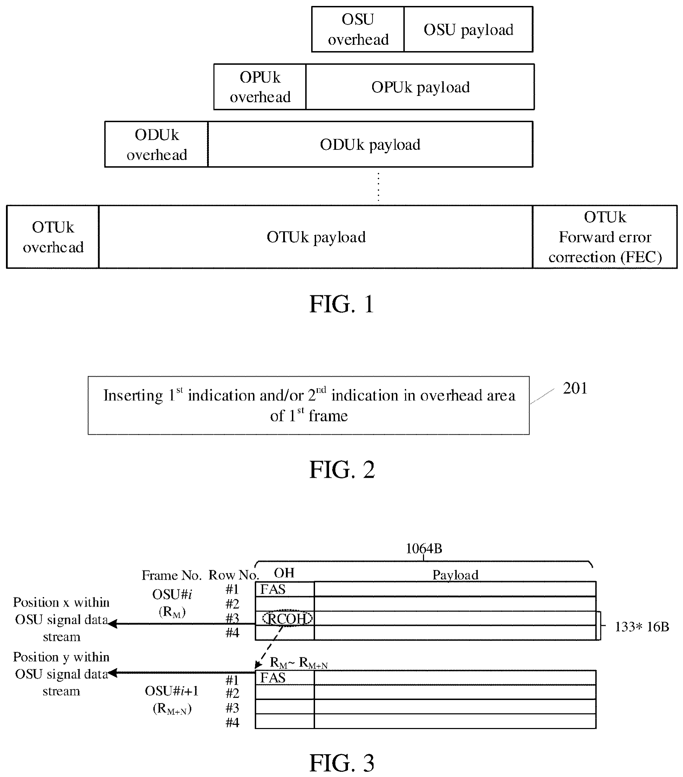

Before transmitting business data through the OTN, the business data may be mapped to an OSU frame, and the OSU frame may be encapsulated into one OPU of the plurality of OPUs. FIG. 1 shows an example of OSU frame mapping. As shown in FIG. 1, client data may firstly be mapped to a payload section of the OSU frame; and the payload may also be referred to as a load. Subsequently, the OSU frame may be encapsulated into an optical channel payload unit (OPU) frame. Specifically, the OSU frame may firstly be mapped to an optical service tributary unit (OSTU) frame. The OSTU frame may then be multiplexed into the OPU frame. The OSTU frame may serve as the payload of the OPU frame. The OPU frame may then be encapsulated into an optical channel data unit (ODU). Finally, the ODU may be encapsulated into an optical channel transport unit (OTU). That is, a mapping path of the client data may be: client data - OSU frame - OPUk frame - ODUk - OTUk.

In the art, a long OPU multiframe period and a delay indication may result in a prolonged rate adjustment time length. In addition, a G.HAO lossless bandwidth adjustment mechanism in the art may be highly complex, such that lossless rate adjustment may not be performed flexibly and quickly. In summary, when transmitting fine-granularity services through the OTN, the transmission rate of the service data may not be adjusted flexibly and quickly.

Accordingly, in the embodiments of the present disclosure, in an electronic device, a first indication and/or a second indication may be inserted into an overhead area of a first frame. The first indication may be configured to indicate adjusting a rate of the first frame, and the second indication may be configured to indicate adjusting the rate of the first frame from a first rate to a second rate. According to the above disclosure, when the rate of the first frame needs to be adjusted, the first indication and/or the second indication may be inserted into the overhead area of the first frame. In this way, the electronic device may flexibly and quickly adjust the rate of the first frame based on the first indication and/or the second indication.

The present disclosure will be described in further detail by referring to the accompanying drawings and embodiments.

The present disclosure provides a mapping method performed by an electronic device. As shown in FIG. 2, the method may include following operations.

In an operation 201, a first indication and/or a second indication may be inserted into an overhead area of a first frame.

The first indication may be configured to indicate adjusting a rate of the first frame, and the second indication may be configured to indicate adjusting the rate of the first frame from a first rate to a second rate.

The electronic device may map client data into the first frame at a third layer. The client data may be carried in a payload area of the first frame. The client data may be referring to client signals, business data, or client services. During a process of mapping the first frame to the second frame at a second layer, when the rate of the first frame needs to be adjusted, the first indication and/or second indication may be inserted into the overhead (OH) area of the first frame. The rate may be referred to as a speed (rate), and the overhead area may be referred to as an overhead section, and being inserted may be referred to as being added or increased. The rate of the first frame may be a processing, emitting, or transmission rate of the first frame. For example, when a frame length of the first frame is M bits and a time length of processing, emitting, or transmitting the first frame is N seconds, the rate of the first frame is M/N (bits per second).

A third layer may be referred to as a client signal layer. The third layer may be a client layer of the second layer, and the second layer may be a service layer of the third layer. The second layer may include an OSTU layer, which may be configured to carry the first frame. The first frame may include, but not limited to, at least one of: an OSU frame, a sub-1G frame, a fine-granularity frame, a small-bandwidth frame, or a micro-channel ($\mu$-channel) frame. The second frame may include the OSTU frame, and the OSTU frame may serve as the payload of the OPU frame. The second frame may be referred to as a branch unit or an optical service tributary unit (OSTU) of the first frame.

Terms of an indication/indicator and an instruction may be used interchangeably. The first indication may be a reconfiguration control overhead (RCOH) indicator or an ROCH indication. The first indication may be configured to indicate an increase or decrease in the rate of the first frame. The second indication may be understood as a rate change indication or a rate change indicator. The first rate may be different from the second rate. The first rate can be greater than or less than the second rate. To be noted that the second indication may alternatively be configured to indicate a post-adjusted rate of the first frame (such as the second rate).

For example, when the first frame is the OSU frame, FIG. 3 shows an example of a structure of the OSU frame. As shown in FIG. 3, a size of the first frame may be $4 \times 1064$ bytes (B, Byte). The RCOH indication in an i-th first frame may indicate that the rate of the first frame is to be changed from the first rate $R_M$ to $R_{M+N}$. The RCOH indication may be located in a third row of the overhead area of the first frame. The third row may correspond to a position x in an OSU signal data stream. A point at which the rate of the first frame is changed may be a position y in the OSU signal data stream. The position y may be located at a start position or an initial position of an (i+1)-th first frame, and that is, the position y may be located at a start position of a frame alignment signal (FSA) in the (i+1)-th first frame. The RCOH indication in the i-th first frame and the FSA in the (i+1)-th first frame may be spaced apart from each other by 133* 16B, and that is, an interval between the position x and the position y may be 2*1064B.

To be noted that the RCOH indication may include a bandwidth resize (BWR) indication, denoted as BWR_IND. The BWR_IND may be configured to indicate a rate adjustment status of the first frame. For example, when a value of the BWR_IND changes from 0 to 1, the BWR_IND may indicate adjusting the rate of the first frame or indicate that the rate of the first frame is to be changed from the first rate $R_M$ to $R_{M+N}$, or indicate that the post-adjusted rate of the first frame. When the value of the BWR_IND is 0, the BWR_IND may indicate stopping adjusting the rate of the first frame or indicate that the rate of the first frame remains unchanged.

In the case that the first indication is inserted into the overhead area of the first frame, in an embodiment, the method may further include following.

When the first indication is detected, the rate of the first frame may be adjusted after waiting for a first time length.

The electronic device may transmit the first frame from the third layer to the second layer. When the electronic device detects or reads the first indication, the electronic device may wait for the first time length before adjusting the rate of the first frame. Waiting for the first duration may be referred to as delaying or postponing for a period of time. A time length of the delaying or the postponement may be determined according to actual circumstances or actual needs.

The first time length may be a set time length. The first time length may correspond to the electronic device. Different electronic devices may correspond to different first time lengths or a same time length. Of course, the first time length may alternatively be determined according to actual circumstances or actual needs.

For example, the first time length may be a product of (Y-1) and a time slot size. The Y may represent a mapping position of the point, at which the rate of the first frame is changed (the position y), in the second layer. For example, when the time slot size is 16B, the first time length may be a time length required to transmit, or map, or multiplex (Y-1)*16B of data.

When $X + \text{ceiling}\left(\frac{(y-x)\times P_{M+N}}{C_m(M)}\right) < P_{M+N}$, $Y = X + \text{ceiling}\left(\frac{(y-x)\times P_{M+N}}{C_m(M)}\right)$.

The X may represent a mapping position of the first indication in the second layer. The $\text{ceiling}\left(\frac{(y-x)\times P_{M+N}}{C_m(M)}\right)$ may represent upward rounding of $\left(\frac{(y-x)\times P_{M+N}}{C_m(M)}\right)$. The y may represent the position y, and that is, the position, at which the rate of the first frame is changed, in the signal data stream of the first frame. The x may represent the position of the first indication or the second indication of the first frame in the signal data stream of the first frame. The $P_{M+N}$ may represent the post-adjusted rate of the first frame. The $C_m(M)$ may represent a Cm value corresponding to the unadjusted rate of the first frame.

When $X + \text{ceiling}\left(\frac{(y-x)\times P_{M+N}}{C_m(M)}\right) \geq P_{M+N}$, $Y = X + \text{ceiling}\left(\frac{(y-x)\times P_{M+N}}{C_m(M)}\right) - P_{M+N}$.

In an embodiment, adjusting the rate of the first frame may include at least one of the following.

The number of time slots allocated by the first layer to the second layer may be adjusted, and the second layer may be used to carry the first frame.

The number of time slots allocated by the first layer to the first frame may be adjusted.

In the present embodiment, the electronic device may adjust the rate of the second layer by adjusting the number of time slots allocated by the first layer to the second layer and then map the first frame to the second frame of the second layer with the adjusted number of time slots. In this way, the rate of the first frame may be adjusted. The electronic device may alternatively adjust the rate of the first frame by adjusting the number of time slots allocated by the first layer to the first frame and then map the first frame to the second frame of the second layer. The second layer being used to carry the first frame may be understood as a frame of the second layer (the second frame) being used to encapsulate the first frame.

The number of time slots may be referred to as the amount or the quantity of time slots. The first layer may include the OPU layer; the first layer may be the service layer of the second layer, and the second layer may be the client layer of the first layer.

To be noted that adjusting the number of time slots allocated by the first layer to the second layer may include increasing or decreasing the number of time slots allocated by the first layer to the second layer based on the current number of time slots in the second layer. Increasing the number of time slots allocated by the first layer to the second layer may be used to increase the rate of the first frame. Decreasing the number of time slots allocated by the first layer to the second layer may be used to decrease the rate of the first frame.

Adjusting the number of time slots allocated by the first layer to the first frame may include increasing or decreasing the number of time slots allocated by the first layer to the first frame. Increasing the number of time slots allocated by the first layer to the first frame may be used to increase the rate of the first frame. Decreasing the number of time slots allocated by the first layer to the first frame may be used to decrease the rate of the first frame.

In the case that the second indication is inserted into the overhead area of the first frame, in an embodiment, the method may further include the following.

When the second indication is detected, the rate of the first frame may be adjusted from the first rate to the second rate after waiting for the first time length.

In the present embodiment, the electronic device may transmit the first frame from the third layer to the second layer. When the electronic device detects or reads the second indication, the electronic device may wait for the first time length and then adjust the rate of the first frame from the first rate to the second rate.

In an embodiment, adjusting the rate of the first frame from the first rate to the second rate may include at least one of the following.

The number of time slots allocated by the first layer to the second layer may be changed from M to M+N.

The number of time slots allocated by the first layer to the first frame may be changed from M to M+N. The second layer may be used to carry the first frame, and the M and the N may both be integers.

In the present embodiment, before the electronic device adjusts the rate of the first frame, the number of time slots allocated by the first layer to the second layer or to the first frame may be M, and the M may be a positive integer. That is, when the rate of the first frame is the first rate, the number of time slots allocated by the first layer to the second layer or to the first frame may be M. When the rate of the first frame is the second rate, the number of time slots allocated by the first layer to the second layer or to the first frame may be M+N, and the N may be a positive integer or a negative number. When the N is the positive integer, it may be indicated that the rate of the first frame is increased, and the second rate is greater than the first rate. When N is the negative integer, it may be indicated that the rate of the first frame is decreased, and the second rate is less than the first rate.

In order to achieve rate adaptation between the first frame and the second layer or between the first frame and the second frame, in an embodiment, the method may further include the following.

The Cm value may be determined based on the adjusted rate of the first frame and a third rate. The third rate may represent the rate allocated by the first layer to the second layer after adjusting the rate of the first frame.

The first frame may be mapped to the second frame in the second layer based on the adjusted rate of the first frame and the Cm value.

In the present embodiment, the electronic device may determine or obtain the post-adjusted rate of the first frame and the third rate; determine the Cm value based on the post-adjusted rate of the first frame and the third rate; and map the first frame to the second frame of the second layer based on the post-adjusted rate of the first frame and the determined Cm value. The post-adjusted rate of the first frame may be referred to as the rate of the first frame after the adjustment or a new rate of the first frame. When the first frame contains the second indication, the post-adjusted rate of the first frame may be the second rate. The third rate may be referred to as the rate allocated by the first layer to the second layer after adjusting the rate of the first frame is completed, such as after the number of time slots allocated by the first layer to the second layer or to the first frame is adjusted. Alternatively, the third rate may be referred to as the rate allocated by the first layer to the second layer after adjusting the number of time slots allocated by the first layer to the second layer or to the first frame. To be noted that adjusting the rate of the first frame and the third layer allocating the rate to the second layer may be performed in parallel to each other. In practice, the two tasks are executed almost simultaneously, only a circuit processing delay or a processing delay may occur.

To be noted that before adjusting the rate of the first frame, the electronic device may determine the Cm value based on the first rate and a fourth rate; and may map the first frame to the second frame of the second layer based on the first rate and the Cm value. The fourth rate may represent the rate allocated by the first layer to the second layer in the case that the rate of the first frame is not adjusted.

To be noted that the mapping method of the first frame may be a Generic Mapping Procedure (GMP). When the rate of the first frame is adjusted, and when the mapping from the first frame to the second frame is implemented based on 128×(M+N) bit granularity, the Cm value may be determined using the following formula:

$$Cm = \left( \frac{n \times Cn}{m} \right) = \left( \frac{f_{client}}{f_{server}} \times \frac{B_{server}}{m} \right) = \left( \frac{f_{client}}{f_{server}} \times \frac{B_{server}}{128 \times (M+N)} \right) = \left( \frac{f_{client}}{f_{server}} \times \frac{B_{server}/128}{M+N} \right)$$

The m may represent m bits. The Cn may represent an n-bit client data count, i.e., the number of n-bit data blocks of each second frame. The $f_{client}$ may represent a bit rate or bit rate tolerance of the client data. The $f_{server}$ may represent a bit rate or bit rate tolerance of the payload in the second layer. The $B_{server}$ may represent the number of bits b of each second frame. To be noted that the 128 in the 128×(M+N) bits may be replaced with a multiple of 8.

Since only integer numbers of n-bit data blocks can be transmitted in each second frame, an integer value Cm(t) of the Cm must be used. Since all client data must not be lost, a rounded-off portion must be considered during the rounding process.

For example, when the Cm value is 10.25, it may be represented as an integer sequence 10, 10, 10, 11. An expression of the Cm(t) may be as follows:

$$Cm(t) = \text{int}\left( Cm \right) = \text{int}\left( \frac{f_{client}}{f_{server}} \times \frac{B_{server}/128}{M+N} \right)$$

In a case that the Cm value is not an integer, the Cm(t) may be determined according to a formula

$$Cm(t) = floor\left( \frac{f_{client}}{f_{server}} \times \frac{B_{server}/128}{M+N} \right) \quad \text{or a formula} \quad Cm(t) = \text{ceiling}\left( \frac{f_{client}}{f_{server}} \times \frac{B_{server}/128}{M+N} \right). \quad \text{The}$$

$$floor\left( \frac{f_{client}}{f_{server}} \times \frac{B_{server}/128}{M+N} \right) \quad \text{may represent a downward rounding of} \quad \left( \frac{f_{client}}{f_{server}} \times \frac{B_{server}/128}{M+N} \right).$$

To be noted that, since the client data must be fit into the payload area of the second frame, a maximum value of the Cm value and a maximum client bit rate may be limited by the size of the payload area of the second frame. That is, $Cm(t) \leq P_{m,server}$. The $P_{m,server}$ may represent the maximum number of (n-bit) data blocks in the payload area of the second frame.

In the following, the embodiments of the present disclosure will be further illustrated by referring to practical examples where the OSU frame may be served as the first frame and the OSTU frame may be served as the second frame.

Practical Example 1

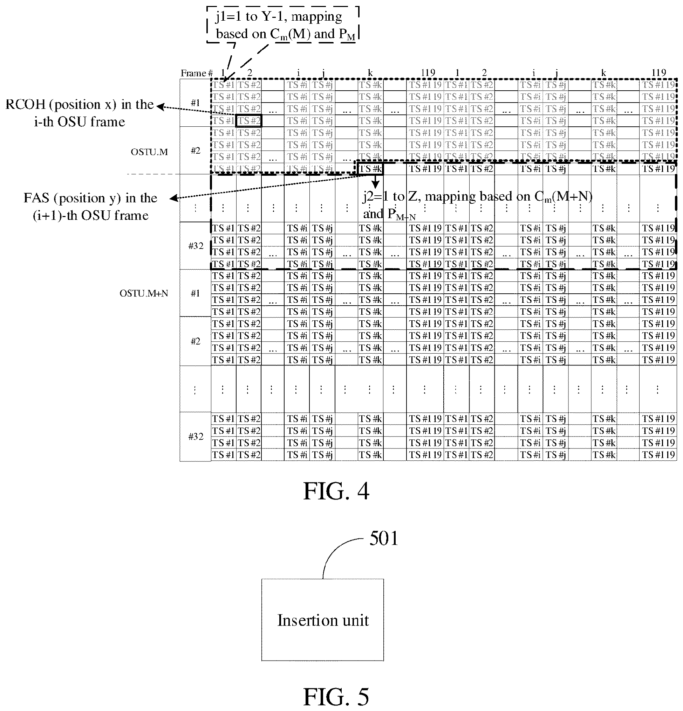

In an operation 1, the electronic device may receive the client data and map the client data to the OSU frame.
In an operation 2, during the process of mapping the OSU frame to the OSTU frame, when the electronic device needs to adjust the rate of the OSU frame, the electronic device may insert the first indication into the overhead area of the OSU frame.
The first indication may be the RCOH indication, and the OSTU frame may be the payload of the OPU frame.
In an operation 3, when the electronic device detects the first indication in the OSU frame, the electronic device may wait for the first time length and then start adjusting the rate of the OSU frame.
For example, when the electronic device detects the first indication in the i-th OSU frame, the electronic device may wait for the first time length or delay for a certain period of time before adjusting the rate of the (i+1)-th OSU frame and the rate of any subsequent OSU frame.
The electronic device may adjust the rate of the OSU frame by adjusting the number of time slots allocated by the OPU layer (first layer) to the second layer (OSTU layer) or to the OSU frame. The second layer before the number of time slots is adjusted may be denoted as OSTU.M, and the second layer after the number of time slots is adjusted may be denoted as OSTU.M+N.
For example, the first time length may be the product of (Y-1) and the time slot size. As shown in FIG. 4, the Y may represent the mapping position of the point (position y), at which the rate of the first frame is changed, in the second layer OSTU.M+N. The point at which the rate of the first frame is changed may be the FAS in the (i+1)-th OSU frame. For example, when the time slot size is 16B, the first time length may be the time length in which (Y-1)*16B of data are transmitted or mapped.

When  $X + \text{ceiling}\left(\frac{(y-x)\times P_{M+N}}{C_m(M)}\right) < P_{M+N},\ Y = X + \text{ceiling}\left(\frac{(y-x)\times P_{M+N}}{C_m(M)}\right).$

The X may represent the mapping position of the first indication (ROCH indication) in the second layer OSTU.M mapped into the i-th OSU frame. The y may represent the position y, i.e., the position of the FAS of the OSU signal data stream within the (i+1)-th OSU frame. The x may represent the position of the first indication or the second indication in the OSU signal data stream within the i-th OSU frame. The $P_{M+N}$ may represent the post-adjusted rate of the OSU frame. The $C_m(M)$ may represent the Cm value corresponding to the unadjusted rate of the OSU frame.

When  $X + \text{ceiling}\left(\frac{(y-x)\times P_{M+N}}{C_m(M)}\right) \geq P_{M+N},\ Y = X + \text{ceiling}\left(\frac{(y-x)\times P_{M+N}}{C_m(M)}\right) - P_{M+N}.$

In an operation 4, the electronic device may determine the Cm value based on the post-adjusted rate of the OSU frame and the third rate.
The third rate may represent the rate allocated by the OPU layer to the second layer after adjusting the rate of the first frame. The third rate may be referred to as the rate allocated by the OPU layer to the second layer OSTU.M+N. The post-adjusted rate of the OSU frame may be the second rate.
In an operation 5, the electronic device may map the OSU frame to the OSTU frame of the second layer based on the post-adjusted rate of the OSU frame and the determined Cm value.
For example, as shown in FIG. 4, starting from the position Y, the electronic device may map the OSU frame to the OSTU frame of the second layer OSTU.M+N based on the second rate and the determined Cm value.
To be noted that before the position Y, the electronic device has not adjusted the rate of the first frame. At this moment, the electronic device may determine the Cm value based on the first rate and the fourth rate, and map the first frame to the second frame of the second layer OSTU.M based on the first rate and the Cm value. The first rate may represent the current rate of the first frame, i.e., the unadjusted rate. The fourth rate may represent the rate allocated by the OPU layer to the second layer OSTU.M when the rate of the first frame is not adjusted.

Practical Example 2

In an operation 1, the electronic device may receive the client data and map the client data to the OSU frame.
In an operation 2, during the process of mapping the OSU frame to the OSTU frame, when the electronic device needs to adjust the rate of the OSU frame, the electronic device may insert the second indication into the overhead area of the OSU frame.
The second indication may be referred to as a rate change indication.
In an operation 3, when the electronic device detects the second indication in the OSU frame, the electronic device may wait for the first time length and then adjust the rate of the OSU frame from the first rate to the second rate.

For example, when the electronic device detects the second indication in the i-th OSU frame, the electronic device may wait for the first time length or delay for a certain period of time, then adjust the rate of the (i+1)-th OSU frame and the rate of any subsequent OSU frame from the first rate to the second rate.

Adjusting the rate of the OSU frame from the first rate to the second rate may include the following.

The number of time slots allocated by the OPU layer to the second layer may be changed from M to M+N, or the number of time slots allocated by the OPU layer to the OSU frame may be changed from M to M+N. Before adjusting the number of time slots, the second layer may be denoted as OSTU.M; and after adjusting the number of time slots, the second layer may be denoted as OSTU.M+N.

In an operation 4, the electronic device may determine the Cm value based on the second rate and third rate. The third rate may represent the rate allocated by the OPU layer to the second layer after adjusting the number of time slots of the second layer or the OSU frame.

Since the second layer is OSTU.M+N after adjusting the number of time slots, the third rate may be referred to as the rate allocated by the OPU layer to the second layer OSTU.M+N.

In an operation 5, the electronic device may invoke a mapper and may map the first frame to the second frame of the second layer based on the second rate and the Cm value.

According to the above disclosure, the rate of the second layer may be synchronized with the rate of the OSU frame as the rate of the OSU frame changes.

In order to implement the mapping method of the present disclosure, the present disclosure further provides a mapping apparatus configured in the electronic device, as shown in FIG. 5. The mapping apparatus may include the following.

An insertion unit 501 may be configured to insert the first indication and/or the second indication into the overhead area of the first frame.

The first indication may be configured to indicate adjusting the rate of the first frame, and the second indication may be configured to indicate adjusting the rate of the first frame from the first rate to the second rate.

In an embodiment, the mapping apparatus may include the following.

A first adjustment unit may be configured to adjust the rate of the first frame after waiting for the first time length when the first indication is detected.

In an embodiment, the mapping apparatus may include the following.

A second adjustment unit may be configured to adjust the rate of the first frame from the first rate to the second rate after waiting for the first time length when the second indication is detected.

In an embodiment, the first adjustment unit may specifically be used for at least one of the following.

The first adjustment unit may be configured to adjusting the number of time slots allocated by the first layer to the second layer. The second layer may be used to carry the first frame.

The first adjustment unit may be configured to adjusting the number of time slots allocated by the first layer to the first frame.

In an embodiment, the second adjustment unit may specifically be used for at least one of the following.

The second adjustment unit may be configured to change the number of time slots allocated by the first layer to the second layer from M to M+N.

The second adjustment unit may be configured to change the number of time slots allocated by the first layer to the first frame from M to M+N, the second layer may be used to carry the first frame, and the M and the N are both integers.

In an embodiment, the mapping apparatus may include the following.

A determination unit may be configured to determine the Cm value based on the post-adjusted rate of the first frame and the third rate. The third rate may represent the rate allocated by the first layer to the second layer after adjusting the rate of the first frame.

A mapping unit may be configured map the first frame to the second frame in the second layer based on the post-adjusted rate of the first frame and the Cm value.

In practice, the insertion unit 501, the first adjustment unit, the second adjustment unit, the determination unit, and the mapping unit may be implemented by communication interfaces in the mapping apparatus.

To be noted that, the mapping process performed by the mapping apparatus provided in the above embodiment is illustrated based on modules as an example only. In practice, the above processing allocations may be distributed in various program modules as needed, i.e., an internal structure of the apparatus may be divided into various program modules to perform all or part of the processing described above. In addition, the mapping apparatus and the mapping method belong to a same concept, and specific implementation processes are detailed in the method embodiments, which will not be repeated herein.

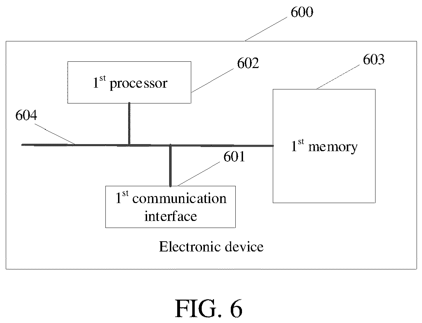

Based on hardware implementation of the above modules, and in order to implement the mapping method of the present disclosure, the present application further provides an electronic device, as shown in FIG. 6 including the following.

A first communication interface 601 may be configured to exchange information with other network nodes.

A first processor 602 may be connected to the first communication interface 601 to achieve information exchanging with other network nodes. When a computer program is being run, the first processor 602 may execute the method provided by one or more of the above technical solutions. The computer program may be stored in a first memory 603.

Specifically, a first processor 602 may be configured to insert the first indication and/or the second indication into the overhead area of the first frame. The first indication may be configured to indicate adjusting the rate of the first frame, and the second indication may be configured to indicate adjusting the rate of the first frame from the first rate to the second rate.

In an embodiment, the first processor 602 may be configured to adjust, when the first indication being detected, the rate of the first frame after waiting for the first time length.

In an embodiment, the first processor 602 may be configured to adjust, when the second indication being detected, the rate of the first frame from the first rate to the second rate after waiting for the first time length.

In an embodiment, the first processor 602 may specifically be configured to perform at least one of the following.

The first processor 602 may adjust the number of time slots allocated by the first layer to the second layer, and the second layer may be configured to carry the first frame.

The first processor 602 may adjust the number of time slots allocated by the first layer to the first frame.

In an embodiment, the first processor 602 may specifically be configured to perform at least one of the following.

The first processor 602 may be configured to change the number of time slots allocated by the first layer to the second layer from M to M+N.

The first processor 602 may be configured to change the number of time slots allocated by the first layer to the first frame from M to M+N. The second layer may be used to carry the first frame, and the M and the N may both be positive integers. In an embodiment, the first processor 602 may further be configured to determine the Cm value based on the post-adjusted rate of the first frame and the third rate; and to map the first frame to the second frame in the second layer based on the post-adjusted rate of the first frame and the Cm value. The third rate may represent the rate allocated by the first layer to the second layer after adjusting the rate of the first frame.

To be noted that specific processing operations of the first processor 602 and the first communication interface 601 may be referred to the above method embodiments.

Of course, in practice, various components of the electronic device 600 may be coupled to each other via a bus system 604. It should be understood that the bus system 604 may be used to facilitate communication between the various components. In addition to a data bus, the bus system 604 may further include power buses, control buses, and status signal buses. However, for clarity, all buses are labeled as the bus system 604 in FIG. 6.

The first memory 603 in the embodiment of the present disclosure may be configured to store various types of data to support operations of the electronic device 600. Examples of the data may include any computer programs to be operated on the electronic device 600.

The method disclosed in the present embodiments may be performed by the first processor 602 or implemented by the first processor 602. The first processor 602 may be an integrated circuit chip having signal processing capabilities. During implementation, the operations of the above method may be performed using integrated logic circuits in hardware of the first processor 602 or through software instructions. The first processor 602 may be a general-purpose processor, a digital signal processor (DSP), or other programmable logic devices, discrete gates or transistor logic devices, discrete hardware components, and so on. The first processor 602 may implement or execute the methods, operations, and logic flow charts in the embodiments of the present disclosure. The general-purpose processor may be a microprocessor or any conventional processor. The operations of the method in the embodiments of the present disclosure may be directly implemented by a hardware decoding processor or executed by combination of hardware and software modules within the decoding processor. The software modules may be located in a storage medium, which may be arranged in the first memory 603. The first processor 602 may read information from the first memory 603 and combine the information with hardware to complete the operations of the method.

In an embodiment, the electronic device 600 may be implemented based on: one or more application-specific integrated circuits (ASICs), a DSP, a programmable logic device (PLD), a complex programmable logic device (CPLD), a field-programmable gate array (FPGA), a general-purpose processor, a controller, a microcontroller (MCU), a microprocessor, or other electronic components, so as to execute the above method.

It is understood that the memory (first memory 603) of the present disclosure may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory may be a disk storage or a tape storage. The volatile memory may be a random access memory (RAM), which may be used as an external cache. For example, but not for limitation, various forms of RAM may be available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in the embodiments of the present disclosure may include, but not limited to, the above and any other suitable types of memories.

In some embodiments, the present disclosure further provides a storage medium, i.e., a computer storage medium. Specifically, the storage medium may be a computer-readable storage medium, such as the first memory 603 that stores the computer program. The computer program may be executed by the first processor 602 of the electronic device 600 to perform the operations described in the above method. The computer-readable storage medium may be a FRAM, a ROM, a PROM, an EPROM, an EEPROM, a Flash Memory, a magnetic surface storage medium, an optical disc, or a CD-ROM.

It should be noted that terms such as "first" and "second" are used to distinguish similar objects and are not intended to describe a specific order or sequence. The term "and/or" herein is merely description of an associative relationship between associated objects, indicating that three relationships may exist. For example, "A and/or B" may indicate that A may exist alone, A and B may both exist, or B may exist alone. In addition, the term "at least one" may refer to any combination of one or more of a plurality of options. For example, including at least one of A, B, and C may indicate any one or more elements selected from the group consisting of A, B, and C. Furthermore, the technical solutions described in the embodiments of the present disclosure may be arbitrarily combined without conflict.

The above description shows merely exemplary embodiments of the present disclosure and is not intended to limit the scope of the present disclosure.

**Claims**

1. A mapping method, comprising:

   inserting a first indication and/or a second indication into an overhead area of a first frame,
   wherein, the first indication is configured to indicate adjusting a rate of the first frame, and the second indication is configured to indicate adjusting the rate of the first frame from a first rate to a second rate.

2. The mapping method according to claim 1, further comprising:
   when the first indication being detected, adjusting the rate of the first frame after waiting for a first time length.

3. The mapping method according to claim 1, further comprising:
   when the second indication being detected, adjusting the rate of the first frame from the first rate to the second rate after waiting for the first time length.

4. The mapping method according to claim 2, wherein the adjusting the rate of the first frame comprises at least one of:

   adjusting the number of time slots allocated by a first layer to a second layer, wherein the second layer is used to carry the first frame; or
   adjusting the number of time slots allocated by the first layer to the first frame.

5. The mapping method according to claim 3, wherein the adjusting the rate of the first frame from the first rate to the second rate comprises at least one of:

   changing the number of time slots allocated by a first layer to a second layer from M to M+N; or
   changing the number of time slots allocated by the first layer to the first frame from M to M+N, wherein the second layer is used to carry the first frame, and M and N are both integers.

6. The mapping method according to any one of claims 1 to 5, further comprising:

   determining a Cm value for a m-bit client data count based on a post-adjusted rate of the first frame and a third rate;
   wherein the third rate represents a rate allocated by the first layer to the second layer after adjusting the rate of the first frame; and
   mapping the first frame to a second frame in a second layer based on the post-adjusted rate of the first frame and the Cm value.

7. A mapping apparatus, comprising:

an insertion unit, configured to insert a first indication and/or a second indication into an overhead area of a first frame,
wherein, the first indication is configured to indicate adjusting a rate of the first frame, and the second indication is configured to indicate adjusting the rate of the first frame from a first rate to a second rate.

8. An electronic device, comprising a first processor and a first communication interface, wherein,

   the first processor is configured to insert a first indication and/or a second indication into an overhead area of a first frame;
   wherein, the first indication is configured to indicate adjusting a rate of the first frame, and the second indication is configured to indicate adjusting the rate of the first frame from a first rate to a second rate.

9. An electronic device, comprising a first processor and a first memory configured store a computer program that is capable of being run on the first processor,
   wherein, the first processor is configured to execute, when running the computer program, operations of the mapping method according to any one of claims 1 to 6.

10. A storage medium, storing a computer program, wherein, the computer program, when being executed by a processor, is configured to perform operations of the mapping method according to any one of claims 1 to 6.

| OSU overhead | OSU payload |
|---|---|

| OPUk overhead | OPUk payload |
|---|---|

| ODUk overhead | ODUk payload |
|---|---|

| OTUk overhead | OTUk payload | OTUk Forward error correction (FEC) |
|---|---|---|

**FIG. 1**

Inserting 1$^{st}$ indication and/or 2$^{nd}$ indication in overhead area of 1$^{st}$ frame ⟋ 201

**FIG. 2**

1064B

| | Frame No. | Row No. | OH | Payload |
|---|---|---|---|---|
| Position x within OSU signal data stream | OSU#$i$ (R$_M$) | #1 | FAS | |
| | | #2 | | |
| | | #3 | RCOH | |
| | | #4 | | |
| Position y within OSU signal data stream | | R$_M$~ R$_{M+N}$ | | |
| | OSU#$i$+1 (R$_{M+N}$) | #1 | FAS | |
| | | #2 | | |
| | | #3 | | |
| | | #4 | | |

133* 16B

**FIG. 3**

j1=1 to Y-1, mapping based on $C_m(M)$ and $P_M$

RCOH (position x) in the i-th OSU frame

OSTU.M

FAS (position y) in the (i+1)-th OSU frame

j2=1 to Z, mapping based on $C_m(M+N)$ and $P_{M+N}$

OSTU.M+N

FIG. 4

501

Insertion unit

FIG. 5

13

FIG. 6

## INTERNATIONAL SEARCH REPORT

| International application No. |
| --- |
| **PCT/CN2024/084177** |

| A. | CLASSIFICATION OF SUBJECT MATTER |
| --- | --- |

H04W72/0446(2023.01)i; H04J3/16(2006.01)i

According to International Patent Classification (IPC) or to both national classification and IPC

| B. | FIELDS SEARCHED |
| --- | --- |

Minimum documentation searched (classification system followed by classification symbols)

IPC: H04W H04J

Documentation searched other than minimum documentation to the extent that such documents are included in the fields searched

Electronic data base consulted during the international search (name of data base and, where practicable, search terms used)

CNKI, CNTXT, ENTXTC, ENTXT, 3GPP: 标识, 标志, 指示, 重新配置控制开销, 带宽调整标识, 调节, 调整, 改变, 开销区, 时隙, 速度, 速率, 帧, indication, indicator, RCOH, BWR, bwr_ind, band width resize, adjust, change, overhead, slot, rate, frame

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 103891222 A (TELEFONAKTIEBOLAGET LM ERICSSON (PUBL)) 25 June 2014 (2014-06-25) <br> description, paragraphs [0031]-[0076] | 1-10 |
| A | CN 101217334 A (HUAWEI TECHNOLOGIES CO., LTD.) 09 July 2008 (2008-07-09) <br> entire document | 1-10 |
| A | CN 112788442 A (FIBERHOME TELECOMMUNICATION TECHNOLOGIES CO., LTD. et al.) 11 May 2021 (2021-05-11) <br> entire document | 1-10 |
| A | US 2015365739 A1 (CIENA CORP.) 17 December 2015 (2015-12-17) <br> entire document | 1-10 |
| A | FUJITSU. "CSI-RS resource indication for PDSCH rate matching final" <br> *3GPP tsg_ran\WG1_RL1, R1-1715484*, 12 September 2017 (2017-09-12), <br> entire document | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 June 2024** | **28 June 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/084177**

| Patent document cited in search report | | | Publication date (day/month/year) | Patent family member(s) | | | Publication date (day/month/year) |
|---|---|---|---|---|---|---|---|
| CN | 103891222 | A | 25 June 2014 | WO | 2013056739 | A1 | 25 April 2013 |
| | | | | EP | 2745476 | A1 | 25 June 2014 |
| | | | | EP | 2745476 | B1 | 29 June 2016 |
| | | | | US | 2013101292 | A1 | 25 April 2013 |
| | | | | US | 9118585 | B2 | 25 August 2015 |
| CN | 101217334 | A | 09 July 2008 | | None | | |
| CN | 112788442 | A | 11 May 2021 | | None | | |
| US | 2015365739 | A1 | 17 December 2015 | US | 9917668 | B2 | 13 March 2018 |

Form PCT/ISA/210 (patent family annex) (July 2022)

**EP 4 694 451 A1**

**Patent documents cited in the description**

- CN 202310339447